# EUROPEAN PATENT SPECIFICATION

(11) **EP 1 964 195 B1**
(45) Date of publication and mention of the grant of the patent: **10.08.2011**
(21) Application number: 06814916.0
(22) Date of filing: 20.09.2006
(51) Int. Cl.: H01M 4/86, H01M 4/88, H01M 8/12, C23C 4/12

(54) **METHOD FOR DEPOSITING A STEPPED-GRADIENT FUEL ELECTRODE ONTO A FUEL CELL SUPPORT**
VERFAHREN ZUR HERSTELLUNG EINER BRENNSTOFFELEKTRODE MIT ABGESTUFTEM GRADIENTEN AUF EINEN BRENNSTOFZELLENSUBSTRAT
PROCÉDÉ DE FABRICATION D'UNE ÉLECTRODE À COMBUSTIBLE À GRADIENTS À PALIERS SUR UN SUPPORT DE PILE À COMBUSTIBLE

(30) Priority: 08.12.2005 US 298321
(43) Date of publication of application: 03.09.2008
(73) Proprietor: Siemens Energy, Inc., Orlando, FL 32826-2399 (US)
(72) Inventor: HUANG, Keqin, Export, PA 15632 (US); HARTER, Harold D., Munhall, PA 15120 (US); TURKAL, Paul G., Mcmurray, PA 15317 (US)
(74) Representative: McGowan, Nigel George
(86) International application number: PCT/US2006/036427
(87) International publication number: WO 2007/067242

(56) References cited:
- EP-A- 1 536 505
- WO-A-00/00660
- US-A1- 2003 224 232
- US-A1- 2004 209 147
- US-A1- 2005 208 367
- ZHENG R ET AL: "A study of Ni + 8YSZ/8YSZ/La0.6Sr0.4CoO3-delta ITSOFC fabricated by atmospheric plasma spraying" JOURNAL OF POWER SOURCES, ELSEVIER, AMSTERDAM, NL, vol. 140, no. 2, 2 February 2005 (2005-02-02), pages 217-225, XP004917729 ISSN: 0378-7753

## Description

### Field of the Invention

This invention relates to solid oxide fuel cells, and more particularly to the making of the fuel electrodes on the fuel cell.

### Background

Solid oxide fuel cells (SOFC) offer power generation in designs that produce energy cleanly and efficiently, and as the technology marches towards maturity the wide-spread use of fuel cells becomes closer. Inventions such as the standard package design by Gillett, US Patent 6,764,784 have helped this advancement.

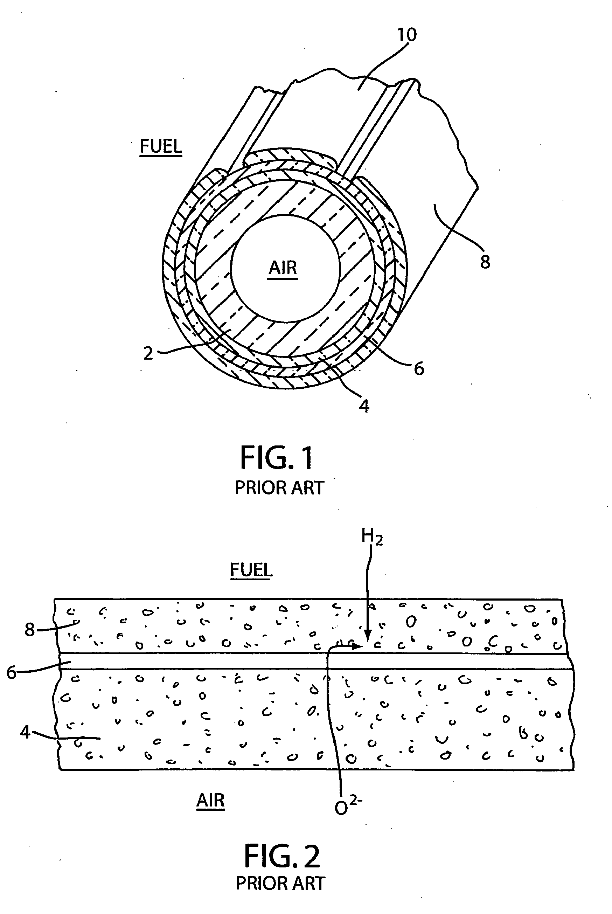

An example of a typical tubular SOFC design is illustrated in cross-section in Fig. 1 with an exaggerated scale. Air flows along the inside of the support tube **2,** which has layers on it first a cathode or air electrode substrate **4,** then a thin solid electrolyte layer **6,** and finally an anode or fuel electrode **8.** Finally, there is an interconnection **10** that receives electron flow from adjoining fuel cells. Hydrocarbon fuels flowing along the outside of the cell mixes with oxygen delivered by the thin solid electrolyte layer **6** from the air, to form water, carbon dioxide and electrons.

Fig. 2 illustrates a scaled cross-sectional close-up of the cathode, electrolyte and anode layers. Oxygen transports through the air electrode substrate **4** and the electrolyte **6** to mix with the hydrocarbon fuels in the fuel electrode **8** to produce water, carbon dioxide and electrons.

The composition of the various anode layers necessarily needs to be different from one another. The electrolyte layer **6** is composed of Y₂O₃ or Sc₂O₃ doped ZrO₂, or Sm-doped CeO₂ or an equivalent (collectively referred to herein as YSZ/ScSZ) where Y and Sc are rare earth elements. The air electrode substrate **4,** is porous, about 30% porosity, and a homogeneous mix of Ca and Ce doped LaMnO₃. The fuel electrode **8** is also porous, about 30% porosity, and is a homogeneous mix of about 25 wt%YSZ/ScSZ and 75 wt% conductive metal.

However, the layers of the fuel electrode perform multiple functions which can be at odds with each other. For example, in the fuel electrode layer, the YSZ/ScSZ content helps the fuel oxidation reaction, but hinders the conduction of the electron flow. Therefore, the prior art has sought to maximize the net benefit of reaction versus conduction in the percentages given above, which, of course involves a compromise on each aspect.

The fuel electrode layers are deposited onto the support tube by slurry-coating techniques such as screen-printing and dip-coating, which give the homogenous layers discussed above.

What is needed is a method that will produce fuel cells with layers that have a facile fuel oxidation reaction, as well as a better electronic conduction.

Other difficulties with the prior art also exist, some of which will be apparent upon further reading.

EP 1 536 505 A2 discloses a fuel electrode for a solid oxide fuel cell including a metal and an oxide with oxygen ion conductivity. In the fuel electrode, the oxide is porous, and a concentration of the metal is reduced from a front surface of the fuel electrode toward an electrolyte layer. By this structure, the fuel electrode is capable of increasing the reaction rate of an electrochemical reaction and increasing cell output by constructing the electron and ion-conducting paths and by increasing the contact between the Ni layer and the oxide layer.

US 2005/208367 A1 discloses a fuel cell including a carrier substrate for an electrode layer of a cathode-electrolyte-anode unit. The substrate is made of a corrosion-resistant material, is permeable to a combustible gas or oxygen, and is integrally joined to a metallic frame or plate. An electrically conductive material is supplied on the carrier substrate to provide maximum conductivity across the substrate. Preferably, the corrosion-resistant material is a chromium steel with an aluminum oxide or silicon oxide layer, while the electrically conductive material may be Ni, Cu, or Co. Wires, wire pieces, or chips made of the electrically conductive material can be integrated into the permeable structure. Alternatively, the electrically conductive material may be particles impregnated in the carrier substrate as a powder, slurry, or suspension. The electrically conductive material may also be applied in the form of a dissolved salt which is converted at start-up of the fuel cell.

US 2004/209147 A1 discloses a sealing structure for a fuel cell and/or an electrolyzer, in particular a solid electrolyte fuel cell and/or a solid electrolyte electrolyzer, wherein the sealing structure is arranged between adjoining separator plates of a cell stack, wherein the sealing structure is embodied in at least two layers and has at least one insulating layer and at least one sealing layer, wherein the insulating layer is arranged on a separator plate.

Zheng R et al: "A study of Ni + 8YSZ/8YSZ/La0.6Sr0.4CoO3-delta ITSOFC fabricated by atmospheric plasma spraying" JOURNAL OF POWER SOURCES, ELSEVIER, AMSTERDAM, NL, vol. 140, no. 2, 2 February 2005, pages 217-225, discloses the use of different hydrogen gas levels in an atmospheric plasma spray in connection with depositing an electrolyte layer. This publication includes an investigation of how the density of the electrolyte layer varies with variation in parameters of the atmospheric plasma spray, including hydrogen flow rate.

### Summary of the Invention

According to the present invention there is provided a method for depositing a stepped-gradient fuel electrode onto a fuel cell support, comprising: placing a solid oxide fuel cell support into an atmospheric plasma spraying chamber, the solid oxide fuel cell support comprising an air electrode layer and an electrolyte layer; measuring spray parameters of an atmospheric plasma spray to obtain reactive oxides, conductive metal and graphite phases; spraying said spray parameters onto said solid oxide fuel cell support to produce a plurality of sub-layers on said solid oxide fuel cell support, the plurality of sub-layers forming the stepped-gradient fuel electrode; and adjusting a hydrogen gas flow rate of said atmospheric plasma spray; wherein the adjusting of said hydrogen gas flow rate comprises (i) using a first hydrogen gas level to produce initial sub-layers of the plurality of sub-layers, the initial sub-layers comprising a first gradient region of the stepped-gradient fuel electrode, and (ii) using a second lower hydrogen gas level to produce subsequent sub-layers of the plurality of sub-layers, the subsequent sub-layers comprising a second gradient region of the stepped-gradient fuel electrode; wherein the first gradient region has a greater reactive oxides content than the second gradient region; wherein said first gradient region has a reactive oxides content of 25-50% by weight; wherein said second gradient region has a reactive oxides content of 10-25% by weight; wherein said reactive oxides and said conductive metal constitute the stepped-gradient fuel electrode and said graphite is sublimated to create pores in the stepped-gradient fuel electrode; and wherein the porosity of the stepped-gradient fuel electrode is less in the first gradient region than the second gradient region due to the higher hydrogen gas level used to produce the first gradient region.

The method of the present invention, inter alia, facilitates generation of power from fuel cells by providing stepped-gradient fuel electrodes. The present invention provides a heterogeneous fuel electrode. The fuel electrode comprises two or more distinct regions that vary in base composition and porosity. This allows for greater fuel oxidization and electron flow. The regions are made up of sub-layers that have been deposited by APS.

The reactive oxides may be YSZ/ScSZ, and the conductive metal may be nickel. A gun power of the atmospheric plasma spray may be 10-20 kWe. The first gradient region may comprise 1-4 sub-layers. The first gradient region may have a porosity of not greater than 20%, and the second gradient region may have a porosity of at least 30%. The fuel electrode may comprise more than two gradient regions, and the spraying may be performed by indexing the solid oxide fuel cell support.

### Brief Description of the Figures

The invention is explained in more detail by way of example with reference to the following drawings:

Figure 1, already referred to, illustrates a cross-sectional view of a prior art tubular solid oxide fuel cell (SOFC) with an exaggerated scale.

Figure 2, also already referred to, illustrates a scaled cross-sectional close-up of the cathode, electrolyte and anode layers of the SOFC of Figure 1.

Figure 3 illustrates a close up view with exaggerated scale of the fuel electrode layers of an embodiment of the present invention.

Figure 4 illustrates the YSZ/ScSZ and graphite contents in plasma sprayed fuel electrode as a function of secondary gas H₂ usage.

### Detailed Description of the Invention

The present invention provides a method for depositing a stepped-gradient fuel electrode layer onto a fuel cell support. Particularly, the present invention uses atmospheric plasma spraying (APS) to deposit the stepped-gradient fuel electrode layer. In certain prior art, fuel electrode layers are formed from homogenous mixtures of a metal phase and an oxide phase, referred to as a cermet. However, the fuel electrode layer can perform multiple functions that require conflicting chemical make-up. For example, the fuel electrode requires a strong YSZ/ScSZ content to aid in the fuel oxidation reaction. However, the greater the YSZ/ScSZ content, the lower the conductive metal content, so the weaker the electron flow. A balance, therefore, between the electrochemical reaction and electronic conduction needed to be reached in the fuel electrode composition.

The present invention deposits the fuel electrode layer onto a support in a stepped-gradient manner. The complete layer is typically approximately 100µm thick, but comprises many sub-layers. For example, 100µm fuel electrodes being layered by an APS will comprise 8-14 sub-layers. The content of the sub-layers can be gradually or quickly varied to produce a heterogeneous complete fuel electrode layer rather than the homogeneous layer of the certain prior art. As will now be explained, the prior art contains teaching that is away from using APS because of the basic design of fuel cells. For a majority of SOFC developers, the fuel electrode is used as the fuel cell support; it requires certain thickness, typically 0.5 to 1 mm, to provide sufficient mechanical strength. Traditional methods for making this substrate are tape-casting and die-pressing. APS is not suitable for making the substrate.

Each sub-layer itself is homogeneous, and will contain a different predetermined mixture of reactive oxides, such as YSZ/ScSZ, conductive metal, such as nickel, and porosity, which is initially graphite that is later sublimated to create the pores. The sub-layers may be graded in groups, so that the fuel electrode contains at least two different regions, or each of the sub-layers may have their content altered to produce as many different gradients as there are sub-layers. In most embodiments, the number of gradients will be less than the total number of sub-layers, so that at least some sub-layers will be the same.

The oxidation reaction of fuel occurs mainly within the region of the fuel electrode that is right next to the electrolyte layer. This region is only about 10-20µm thick, and the rest of the fuel electrode layer is used for gas diffusion and current conduction. The stepped-gradient of the present invention increases the proportion of oxides in the sub-layers close to the electrolyte side, or bottom, of the fuel electrode, and decreases the proportion of oxides in the sub-layers close to the fuel side, or top, of the fuel electrode. In addition, the porosity, initially controlled by graphite content, is also decreased on the bottom and increased on the top.

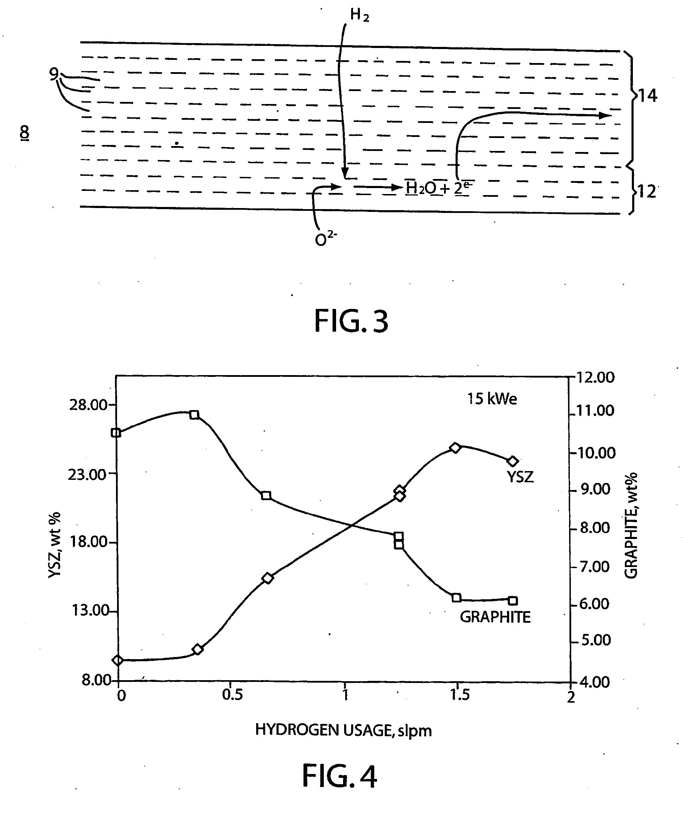

Fig. 3 illustrates an embodiment of the present invention of a fuel electrode that contains at least two distinct sub-layer regions. The fuel electrode **8** is comprised of multiple sub-layers **9.** The bottom layers **12** consisting in this case of approximately 3 sub-layers, will have a high proportion of oxides, for example, 25-50wt% YSZ/ScSZ, and have a porosity of less than 20vol%. The top layers **14** which comprise the bulk of the fuel electrode, will be higher in conductive metal, for example 75-90wt% nickel, and have a porosity of 30vol% or more.

Therefore, in one embodiment of the present invention, the stepped-gradient comprises at least two distinct sub-layer regions **12, 14,** the bottom region being 25-50wt% of oxides and the top region being 75-90wt% conductive metal, and the bottom region being 20vol% or less pores, and the top region being 30vol% or greater pores. In still further embodiments the bottom region comprises 1-4 sub-layers.

If more than two distinct sub-layer regions are used, then the reactive oxides content should be the highest at the bottom and the lowest at the top, with intermediate regions following this trend. The porosity should also increase from bottom to top.

The depositing of the stepped-gradient sub-layers is by use of atmospheric plasma spraying (APS). Atmospheric Plasma Spraying is a process presently used in the manufacture of SOFC's. This implies that the atmosphere into which the plasma is discharged, and in which the target (cylindrical, air electrode tube) resides is ambient air. APS is the most used of all of the thermal spray processes as it can develop sufficient energy to melt almost any material. The plasma gun incorporates a cathode (electrode) and an anode (nozzle) separated by a small gap. For APS used in this application, Hydrogen and Argon gases are used. As power is applied to the plasma gun, these gases pass through this small gap. An electrical arc is present and strips the gases of their electrons and a plasma is formed. As the unstable plasma recombines back to the gaseous state, energy is released. By introducing coating material in the form of powder into the gas plume, it is melted and propelled towards the target, after which this powder solidifies on the target surface forming a coating. Since the flow of each of the gases along with power can be accurately controlled, repeatable coating results can be obtained. The advantages of using APS to manufacture various thin layers for SOFCs are best reflected by its capability to achieve a high as-sprayed density, strong bonding strength and productivity. When using YSZ/ScSZ and Ni, the lower melting point Ni has a higher material utilization than higher melting point YSZ/ScSZ. By altering the plume temperature and particle velocity of the APS, the material utilization and final chemistry of the sub-layers can be adjusted. Referring to Fig. 4, the measured YSZ/ScSZ content as a function of flow rate of secondary H₂ gas at a fixed 15kWe gun power level is illustrated. As shown YSZ/ScSZ content gradually increases with hydrogen below 0.35 slpm and quickly raises to 24wt% at 1.25 slpm H₂, followed by a leveling off at about 1.5 slpm H₂. As the plume temperature of the plasma increases with H₂ flow, more YSZ/ScSZ melts at higher H₂ usage, leading to a higher YSZ/ScSZ content in the deposited sub-layers. The graphite (porosity) content decreases with the usage of hydrogen, since the higher plume temperature helps consume the graphite. Therefore varying the hydrogen flow according to Fig. 4 can produce the sub-layering discussed above.

A particular deposition pattern used by APS known as indexing can be used for particular embodiments. Indexing rotates the cell being sprayed in distinct, 12° turn increments. This can produce a more consistent layer than continuous rotation.

## Claims

1. A method for depositing a stepped-gradient fuel electrode onto a fuel cell support, comprising:
placing a solid oxide fuel cell support (4, 6) into an atmospheric plasma spraying chamber, the solid oxide fuel cell support (4, 6) comprising an air electrode layer (4) and an electrolyte layer (6);
measuring spray parameters of an atmospheric plasma spray to obtain reactive oxides, conductive metal and graphite phases;
spraying said spray parameters onto said solid oxide fuel cell support (4, 6) to produce a plurality of sub-layers (9) on said solid oxide fuel cell support (4, 6), the plurality of sub-layers (9) forming the stepped-gradient fuel electrode (8); and
adjusting a hydrogen gas flow rate of said atmospheric plasma spray;
wherein the adjusting of said hydrogen gas flow rate comprises (i) using a first hydrogen gas level to produce initial sub-layers (9) of the plurality of sub-layers (9), the initial sub-layers (9) forming a first gradient region (12) of the stepped-gradient fuel electrode (8), and (ii) using a second lower hydrogen gas level to produce subsequent sub-layers (9) of the plurality of sub-layers (9), the subsequent sub-layers (9) forming a second gradient region (14) of the stepped-gradient fuel electrode (8);
wherein the first gradient region (12) has a greater reactive oxides content than the second gradient region (14);
wherein said first gradient region (12) has a reactive oxides content of 25-50% by weight;
wherein said second gradient region (14) has a reactive oxides content of 10-25% by weight;
wherein said reactive oxides and said conductive metal constitute the stepped-gradient fuel electrode (8) and said graphite is sublimated to create pores in the stepped-gradient fuel electrode (8); and
wherein the porosity of the stepped-gradient fuel electrode (8) is less in the first gradient region (12) than the second gradient region (14) due to the higher hydrogen gas level used to produce the first gradient region (12).

2. The method of claim 1, wherein said reactive oxides are YSZ/ScSZ.

3. The method of claim 1, wherein said conductive metal is nickel.

4. The method of claim 1, wherein a gun power of said atmospheric plasma spray is 10-20 kWe.

5. The method of claim 1, wherein said first gradient region (12) comprises 1-4 sub-layers (9).

6. The method of claim 1, wherein said first gradient region (12) has a porosity of not greater than 20%, and said second gradient region (14) has a porosity of at least 30%.

7. The method of claim 1, wherein said stepped-gradient fuel electrode (8) comprises more than two gradient regions (12, 14).

8. The method of claim 1, wherein said spraying is done by indexing said solid oxide fuel cell support (4, 6).

## Patentansprüche

1. Verfahren zur Herstellung einer Brennstoffelektrode mit abgestuftem Gradienten auf einem Brennstoffzellensubstrat, welches umfasst:
Anbringen eines Festoxid-Brennstoffzellen- (Solid Oxide Fuel Cell) Substrates (4, 6) in einer Spritzkammer für atmosphärisches Plasmaspritzen, wobei das Festoxid-Brennstoffzellen-Substrat (4, 6) eine Luftelektrodenschicht (4) und eine Elektrolytschicht (6) umfasst;
Messen von Spritzparametern eines atmosphärischen Plasmaspritzens, um Phasen von reaktiven Oxiden, von leitendem Metall und von Graphit zu erhalten;
Spritzen mit den besagten Spritzparametern auf das besagte Festoxid-Brennstoffzellen-Substrat (4, 6), um eine Vielzahl von Teilschichten (9) auf dem besagten Festoxid-Brennstoffzellen-Substrat (4, 6) herzustellen, wobei die Vielzahl von Teilschichten (9) die Brennstoffelektrode mit abgestuftem Gradienten (8) bildet; und
Einstellen einer Wasserstoffgas-Durchflussmenge des besagten atmosphärischen Plasmaspritzens;
wobei das Einstellen der besagten Wasserstoffgas-Durchflussmenge umfasst: (i) Verwenden eines ersten Wasserstoffgaspegels, um Anfangs-Teilschichten (9) von der Vielzahl von Teilschichten (9) zu bilden, wobei die Anfangs-Teilschichten (9) einen ersten Gradientenbereich (12) der Brennstoffelektrode mit abgestuftem Gradienten (8) bilden, und (ii) Verwenden eines zweiten, niedrigeren Wasserstoffgaspegels, um nachfolgende Teilschichten (9) von der Vielzahl von Teilschichten (9) zu bilden, wobei die nachfolgenden Teilschichten (9) einen zweiten Gradientenbereich (14) der Brennstoffelektrode mit abgestuftem Gradienten (8) bilden;
wobei der erste Gradientenbereich (12) einen größeren Gehalt an reaktiven Oxiden aufweist als der zweite Gradientenbereich (14);
wobei der besagte erste Gradientenbereich (12) einen Gehalt an reaktiven Oxiden von 25-50 Gew.-% aufweist;
wobei der besagte zweite Gradientenbereich (14) einen Gehalt an reaktiven Oxiden von 10-25 Gew.-% aufweist;
wobei die besagten reaktiven Oxide und das besagte leitende Metall die Brennstoffelektrode mit abgestuftem Gradienten (8) darstellen und das besagte Graphit sublimiert wird, um Poren in der Brennstoffelektrode mit abgestuftem Gradienten (8) zu erzeugen; und
wobei die Porosität der Brennstoffelektrode mit abgestuftem Gradienten (8) in dem ersten Gradientenbereich (12) aufgrund des höheren Wasserstoffgaspegels, der zum Herstellen des ersten Gradientenbereiches (12) verwendet wird, kleiner ist als in dem zweiten Gradientenbereich (14).

2. Verfahren nach Anspruch 1, wobei die besagten reaktiven Oxide YSZ/ScSZ sind.

3. Verfahren nach Anspruch 1, wobei das besagte leitende Metall Nickel ist.

4. Verfahren nach Anspruch 1, wobei eine Spritzpistolenleistung des besagten atmosphärischen Plasmaspritzens 10-20 kWe beträgt.

5. Verfahren nach Anspruch 1, wobei der besagte erste Gradientenbereich (12) 1-4 Teilschichten (9) umfasst.

6. Verfahren nach Anspruch 1, wobei der besagte erste Gradientenbereich (12) eine Porosität aufweist, die nicht größer als 20 % ist, und wobei der besagte zweite Gradientenbereich (14) eine Porosität aufweist, die mindestens 30 % beträgt.

7. Verfahren nach Anspruch 1, wobei die besagte Brennstoffelektrode mit abgestuftem Gradienten (8) mehr als zwei Gradientenbereiche (12, 14) umfasst.

8. Verfahren nach Anspruch 1, wobei das besagte Spritzen mittels Indexierung (Indexing) des besagten Festoxid-Brennstoffzellen-Substrates (4, 6) durchgeführt wird.

## Revendications

1. Procédé pour déposer une électrode à combustible à gradients étagés sur un support de pile à combustible, consistant:
à placer un support de pile à combustible à oxyde solide (4, 6) dans une chambre de pulvérisation de plasma atmosphérique, le support de pile à combustible à oxyde solide (4, 6) comprenant une couche formant électrode à air (4) et une couche formant électrolyte (6) ;
à doser les paramètres de jet pulvérisé d'un jet pulvérisé de plasma atmosphérique pour obtenir des phases formant oxydes réactifs, métal conducteur et graphite ;
à pulvériser lesdits paramètres de jet pulvérisé sur ledit support de pile à combustible à oxyde solide (4, 6) pour produire une pluralité de sous-couches (9) sur ledit support de pile à combustible à oxyde solide (4, 6), la pluralité de sous-couches (9) formant l'électrode à combustible à gradients étagés (8), et
à ajuster un débit de gaz hydrogène dudit jet pulvérisé de plasma atmosphérique,
étant entendu que l'ajustement dudit débit de gaz hydrogène consiste (i) à utiliser un premier niveau de gaz hydrogène pour produire les sous-couches (9) initiales de la pluralité de sous-couches (9), les sous-couches (9) initiales formant une première zone à gradient (12) de l'électrode à combustible à gradients étagés (8) et (ii) à utiliser un second niveau inférieur de gaz hydrogène pour produire les sous-couches (9) suivantes de la pluralité de sous-couches (9), les sous-couches (9) suivantes formant une seconde zone à gradient (14) de l'électrode à combustible à gradients étagés (8) ;
étant entendu que la première zone à gradient (12) a une teneur en oxydes réactifs plus grande que la seconde zone à gradient (14) ;
étant entendu que ladite première zone à gradient (12) a une teneur en oxydes réactifs de 25-50 % en poids ;
étant entendu que ladite seconde zone à gradient (14) a une teneur en oxydes réactifs de 10-25 % en poids ;
étant entendu que lesdits oxydes réactifs et ledit métal conducteur constituent l'électrode à combustible à gradients étagés (8) et que ledit graphite est sublimé pour créer des pores dans l'électrode à combustible à gradients étagés (8), et
étant entendu que la porosité de l'électrode à combustible à gradients étagés (8) est moindre dans la première zone à gradient (12) que dans la seconde zone à gradient (14) du fait du niveau plus élevé de gaz hydrogène utilisé pour produire la première zone à gradient (12).

2. Procédé selon la revendication 1, dans lequel lesdits oxydes réactifs sont de la zircone stabilisée à l'yttrium (YSZ)/à l'oxyde de scandium (ScSZ).

3. Procédé selon la revendication 1, dans lequel ledit métal conducteur est du nickel.

4. Procédé selon la revendication 1, dans lequel une puissance du canon dudit jet pulvérisé de plasma atmosphérique est de 10-20 kWe.

5. Procédé selon la revendication 1, dans lequel ladite première zone à gradient (12) comprend 1-4 sous-couches (9).

6. Procédé selon la revendication 1, dans lequel ladite première zone à gradient (12) a une porosité ne dépassant pas 20 % et ladite seconde zone à gradient (14) a une porosité d'au moins 30 %.

7. Procédé selon la revendication 1, dans lequel ladite électrode à combustible à gradients étagés (8) comprend plus de deux zones à gradients (12, 14).

8. Procédé selon la revendication 1, dans lequel ladite pulvérisation est faite en indexant ledit support de pile à combustible à oxyde solide (4, 6).
